# EUROPEAN PATENT SPECIFICATION

(11) **EP 3 339 109 B1**
(45) Date of publication and mention of the grant of the patent: **28.08.2019**
(21) Application number: 17208320.6
(22) Date of filing: 19.12.2017
(51) Int. Cl.: B60R 25/01, B60R 25/10

(54) **LOCKING ASSEMBLY**
VERRIEGELUNGSANORDNUNG
ENSEMBLE DE VERROUILLAGE

(30) Priority: 20.12.2016 DK 201600774
(43) Date of publication of application: 27.06.2018
(73) Proprietor: BoxKnox ApS, 6715 Esbjerg N (DK)
(72) Inventor: Nørskov Laursen, Jan, 6715 Esbjerg N (DK)
(74) Representative: Rottenberg, Annabell Simone

(56) References cited:
- WO-A2-2014/060757
- US-A1- 2004 196 153
- US-A1- 2009 102 649
- US-A1- 2010 170 310
- US-A1- 2012 293 655

## Description

### Field of invention

The present invention generally relates to a locking assembly configured to be mounted on a door mounted in a frame in order to prevent the door from being opened. The present invention more particularly relates to a locking assembly that requires a code for unlocking the locking assembly.

### Prior art

Lorry trailers and the items (e.g. foodstuff, electronics, medicine and tobacco) stored therein are prime targets for thieves.

Hundreds of millions of dollars' worth of goods are stolen from trailers. Such targets of opportunity are lucrative for the thieves and costly for the contractor.

Lorry trailers are typically locked by means of a padlock. The key is sent to the receiver of the goods. Hereby, the receiver is capable of unlocking the trailer by using the key received by post.

If the trailer needs to be opened by authorities (e.g. the police during a routine control process), it is only possible to open the trailer by damaging the padlock. In this case, any losses will not be covered by the insurance because the padlock has been removed.

Therefore, it would be an advantage to have an alternative way of securing a trailer. In particular, a way that firstly enables the trailer to be opened in emergency situations without damaging the locking device and secondly secures that the trailer cannot be opened without a prior acceptance from a predefined external entity or device.

Moreover, it would be desirable to be able to verify and document when and where the trailer has been opened, or someone has tried to open the trailer.

From US 6,400,266 B1, a system for sensing whether a door of a trailer is open or closed. A sensor is mounted on the upper rear frame and configured to sense the presence of a heel portion extending perpendicular to the lockrod. The sensor may e.g. be a proximity sensor, a magnetic sensor, or a Hall Effect sensor. However, one system alone may not be sufficient to secure the trailer door.

From US 2009/0102649 A1, a system for monitoring and detecting movement of a shipping container latch is known. The system comprises a magnet attached to the container latch, a sensing unit disposed proximate the magnet, and a communication network, the latter which sends output data to a control authority. The system is for detecting unauthorised opening of or tampering with the door of the container, truck or van. A latch monitor is attached to the door of the latch, and a rotating latching rod operated by a handle is attached thereto. Both doors of the container may be equipped with the latch monitor. If the rotating latching rod is rotated, the movement is detected. Unauthorised opening of the door is determined on the magnetic flux measured by the sensing unit. Thus, the system is based on one system alone and may not be sufficient for securing the container door effectively.

From US 2012/293655 A1, a device for securing a door is known. The door is fastened to a frame with a vertical rod engaging lock operated by a handle. The handle is secured inside a latch lock with a houding attached to the door and a moving part movable inside the housing. Both parts have an opening enabled to receive the handle in a first position with the moving part inside the housing in a first position. The housing has a first and second side slot. The moving part can be moved into the housing in a blocking position by the handle being moved into the first and the second side slot, whereby the moving part fills the opening in the housing to provide a secured handle. The device is mechanical, but may be combined with a monitoring sensor to detect whether the handle and lock are in place, and further optionally a camera which enables the driver to view the status of the door. However, the device may not be sufficient to actually determine whether the door is unauthorizedly opened as the system, apart from the possible camera view, does only provide information of the handle position.

From US 2010/0170310 A1, an apparatus for monitoring the security of doors on e.g. large trucks is known. The apparatus is provided on and end and/or the sides of the container and are secured by vertical rods having cam-like latches at their ends that rotatable from a first disposition in which they engage keepers to lock the doors in a closed position, and a second disposition in which they disengage the keepers to unlock the doors and allow them to swing into an open position. The monitoring system is attached between the locking rod handles and senses any movement of the locking handles or the opening of the doors, and further provides visible signals and/or transmitted signals as an indication of tampering. The apparatus is microprocessor-and sensor-based and senses movement of handles. The apparatus may be retro-fitted and removed upon the load arriving at its destination. The apparatus is based on only one apparatus to monitor whether the doors have been unauthorizedly opened.

If a magnet-based is used to secure a door, such system can easily be bypassed by arranging a further magnet, thereby cheating the system to assume the door is actually closed. Subsequently, the door can be forced open by the thief.

It is an object of the invention to provide a locking assembly that can secure a trailer in an alternative manner.

The invention makes it possible to detect when and where the trailer has been opened, or someone has tried to open the trailer using information from monitoring in different ways.

### Summary of the invention

The object of the present invention can be achieved by a locking assembly as defined in claim 1. Preferred embodiments are defined in the dependent sub claims, explained in the following description and illustrated in the accompanying drawings.

The locking assembly according to the invention is a locking assembly configured to be mounted on a door mounted in a frame in order to prevent the door from being opened, wherein the door has a locking arrangement comprising a handle connected to a rotatably mounted rod member, wherein the locking assembly comprises an angle sensor arranged to detect the rotational position or a change in the rotational position of the rod member, and wherein the locking assembly comprises an anti-rotation device having a locking member and an actuator arranged and configured to displace the locking member and bring the locking member into:
- a position in which the rod member cannot be rotated in one predefined direction of rotation, and
- a position in which the rod member can be rotated in one predefined direction of rotation,
- and a blocking member is attached to the rod member to abut the locking member.

The terms "angle sensor" and "rod sensor", respectively, are used interchangeably herein.

Hereby, it is possible to provide a locking assembly that can secure a trailer in an alternative manner compared to the prior art.

In may be an advantage that the locking assembly comprises a distance sensor. The distance sensor may preferably be located at a door edge, such as on the upper door edge, the lower door edge or at the side door edge. Accordingly, in one embodiment the locking assembly comprises a distance sensor located at a door edge, such as on the upper door edge, the lower door edge or at the side door edge. By the term "door edge" is meant the part of the door which is closes against the surrounding frame, when the door is in a closed position. The distance sensor may be mounted anywhere on the door edge either attached to the door edge, or mounted in a hole or cavity made to fit the distance sensor. In particular, in the case of the presence of two doors, the distance sensor may be mounted on the door at which the locking assembly is mounted. The distance sensor is suitably adjusted so as to continuously measure or detect the distance from the door edge towards the frame, thereby indicating whether the door is closing or is closed. Thus, the measured or detected distance profile gives a certain indication of closing or closure of the door. The distance sensor may be calibrated so as to relate the distance to the closing or closure of the specific door.

It may be an advantage that the distance sensor is connected to the locking assembly by means of an electrical wire or a cable having multiple wires. Thereby, the data from the distance sensor may easily be received and processed by the components of the locking assembly.

It may be an advantage the angle sensor is connected to the locking assembly by means of an electrical wire or a cable having multiple wires. Thereby, the data from the angle sensor may easily be received and processed by the components of the locking assembly. The angle sensor is suitably positioned so as to detect or measure the rotational change of the rod member, thereby indicating that the handle is activated or moved. The angle sensor may be calibrated so as to relate the rotational movement of the rod member to the activation or movement of the handle. Thereby, the measurements or detections of the angle sensor can be related to a specific opening or closure profile of the specific door.

It may be an advantage that the locking assembly comprises both an angle sensor and a distance sensor. In particular, both of the angle and the distance sensors may be connected to the locking assembly by means of electrical wires, whereby measurements or detections of the sensors can be processed by components of the locking assembly. In particular, it may be an advantage that the measurements or detections from the angle sensor and the distance sensor are processed by components of the locking assembly and related to the closing or closure of the door. Thereby, it can be verified whether the door is correctly and securely closed or not. Each of the angle sensor and the distance sensor can be calibrated so as to recognise movement (in case of the angle sensor) and movement and distance to the door frame (in case of the proximity sensor), whereby closing and opening, respectively, can be determined. Attempts to by-pass the double-secured locking assembly is very difficult as interaction or relationship between the measurements or detections from both the angle sensor and the distance sensor must be by-passed in order to "cheat" the assembly.

Thereby, it is also possible to provide a locking assembly that makes it possible to detect when and where someone tries to break into the trailer.

The locking assembly is configured to be mounted on a door by any suitable attachment means. It is however preferred that the locking assembly is mounted by means of threaded rods extending at least partly through the door.

The door is mounted in a frame e.g. of a trailer or another equipment. The locking assembly is configured to prevent the door from being opened. This means that the locking assembly is configured to be brought into a configuration in which the locking assembly blocks the door. The locking assembly is, however, also configured to be brought into a configuration in which the locking assembly allows the door to be opened.

The door comprises a locking arrangement comprising a handle connected to a rotatably mounted rod member. Accordingly, once the handle is activated, the rod member is rotated. Thus, by providing the locking assembly with an angle sensor arranged to detect the rotational position or the change in the rotational position of a rod member, it is possible to detect when someone tries to open the trailer.

The angle sensor is not sensitive to vertical and horizontal accelerations (movements). Therefore, during transportation of a trailer, the angle sensor will not be activated during the drive unless someone tries to open the trailer. Opening of the trailer implies moving the handle. The angle sensor is configured to detect a displacement away from the door, indicating that the door is attempted opened.

It may be an advantage that the locking assembly further comprises a proximity sensor configured to detect when the door is closed, wherein the proximity sensor is configured to detect when the door is brought into contact with the frame.

Hereby, it is possible to improve the safety of the locking assembly. The locking assembly is preferably configured to simultaneously detect both if the door is closed based on measurements from the angle sensor, the distance sensor, and the proximity sensor, and if the rod member has not been rotated based on measurements from the angle sensor.

The distance sensor and the proximity sensor may both be configured to detect when the door is arranged in a position, in which it is nearly closed or entirely closed. It may be advantageous that the locking assembly comprises the distance sensor and the proximity sensor configured to detect when the door is arranged within a predefined positional range. The range may be quantified in terms of the angular position of the door relative to the frame. The range may be 0-30 degrees, 0-20 degrees, 0-10 degrees, preferably 0-5 degrees, such as 0-2 degrees. In another embodiment the range may be quantified in terms of the distance between two predefined sections (e.g. a small area) of the door and the frame. The range may be 0-30 cm, preferably 0-10 cm, such as 0-5 cm. This is particular the case in respect of the distance sensor.

In one embodiment, the locking assembly comprises a distance sensor configured to detect a distance between the distance sensor and a structure that the distance sensor is brought into the proximity of. In a preferred embodiment, the distance sensor measurers the distance between the distance sensor and a structure that the distance sensor is brought into the proximity of on a continuous basis. Hereby, it is possible to detect the profile of a structure that is brought into proximity of during the closing process. This profile may be unique and therefore serve as a criterion for approving the validity of the closing process.
It may be beneficial that the frame is elevated (comprises an inclined structure) in such a manner that the elevation increases the closer the door is to the closed position. In this way, the distance sensor measures a distance that becomes smaller, when the door is nearly or entirely closed. Thereby, it can be verified that the door is closed. The inclined structure may suitably be made of e.g. a rubber material, a metal, a plastic material, a silicone material, or a composite material.

It may be beneficial that the locking assembly comprises a sensor unit for measuring the angular position of the handle. Hereby, it is possible to verify that the door has been properly locked. Accordingly, it is possible to avoid cheating.

It may be advantageous that the various sensors are configured in such a manner that no energy is used, when the door is closed. This may be achieved by applying a switch turning off the sensor or sensors when the door is closed. It may be an advantage that the locking assembly comprises an additional sensor such as a reed relay or an angular sensor arranged and configured to detect when someone tries to open a closed door.

The distance sensor and proximity sensor may be of any suitable type, including ultrasonic sensors or an optical sensor (e.g. a laser sensor).

It may be advantageous that the locking assembly comprises an angle sensor, a distance sensor and/or a proximity sensor arranged in such a manner that both the angle of the door and the position of the door relative to a door rabbet are detected. Hereby, it can be a requirement that both the angle of the door and the position of the door relative to a door rabbet correspond to predefined values before the locking assembly can be unlocked. Accordingly, a safer locking assembly can be provided. The position of the door relative to a door rabbet may be detected by means of a proximity sensor, an angular sensor or a distance sensor.

It may be advantageous that the locking assembly comprises a carbon dioxide sensor (CO₂-sensor) arranged and configured to detect if the content of carbon dioxide is increased inside a trailer. This would be the case if animals or persons are inside the trailer.

It may be an advantage that the rod member comprises a structure configured to be brought into locking engagement with a corresponding engagement member arranged at the frame. In this manner, it is possible to provide reliable locking of a trailer door to the frame of the trailer.

The locking assembly comprises an anti-rotation device having a locking member and an actuator arranged and configured to displace the locking member and bring the locking member into:
- a position in which the rod member cannot be rotated in one predefined direction of rotation, and
- a position in which the rod member can be rotated in one predefined direction of rotation.

Hereby, the locking assembly changes configuration by means of the actuator. The locking assembly can change configuration upon receiving a signal fulfilling one or more predefined requirements.

It may be beneficial that the locking assembly comprises a GPS receiver.

Hereby, the position of the locking assembly can be detected by using the GPS receiver. The position data may be transmitted to an external receiver or stored on an internal storage.

It may be an advantage that the locking assembly comprises an internal storage for storing position data and other data. Hereby, stored data can be accessed later. Data may be accessed on a display or received by a mobile device or a server.

In one embodiment according to the invention, the locking assembly is configured to sample the position on a regular basis, e.g. every minute, every 5 minutes or every 15 minutes.

It may be an advantage that the locking assembly comprises a number of fall back codes that may be used in case new codes cannot be received by the locking assembly.

It may be advantageous that the locking assembly comprises an interface configured to:
- allow a user to enter a code or
- receive a code sent by an external device.

Hereby, the user can enter the code and open the door.

It may be beneficial that the locking assembly comprises a verification module configured to receive a code entered by the user either on a user interface or by applying a remote device, wherein the verification module is configured to verify if the entered code corresponds to a predefined code, wherein the locking assembly is configured to unlock if the entered code corresponds to the predefined code.

Hereby, it is possible to provide a locking assembly that can only be opened when a correct code has been entered.

It may be advantageous that the locking assembly is configured to maintain the locking assembly in a locked configuration if the entered code does not correspond to the predefined code.

It may be beneficial that the locking assembly comprises one or more temperature sensors.

Hereby, it is possible to detect the temperature. This may be an advantage if the locking assembly is mounted on a trailer door, since information about the temperature inside the trailer may be of great value.

It may be an advantage that the one or more temperature sensors are arranged to detect the temperature of the inside space of a trailer.

It may be beneficial that the locking assembly comprises a receiving unit configured to receive sensor measurements made by one or more sensors.

In one embodiment according to the invention, the locking assembly comprises a number of externally arranged temperature sensors. Hereby, the locking assembly is capable of measuring the temperature in different sections of a trailer.

It may be an advantage that the externally arranged temperature sensors are configured to wirelessly send sensor data to the locking assembly.

It may be beneficial that the locking assembly comprises a light sensor.

Hereby, the light sensor may detect if a door has been opened.

It may be an advantage that the light sensor is arranged and configured to measure the light intensity inside a trailer (and thus to detect if someone opens the door).

It may be advantageous that the locking assembly comprises a switch configured to detect if the locking assembly is removed from the door to which it is attached.

Hereby, it is possible to detect if the locking assembly is removed.

It may be beneficial that the locking assembly comprises a display configured to display one or more parameters.

Hereby, it is possible to visualise parameters on the display, e.g. position data stored in a storage.

It may be beneficial that the locking assembly comprises a camera arranged and configured to take a picture or a video sequence.

Hereby, the camera can be used to identify anyone who tries to open the door.

The camera may be arranged on the outer surface of the door, preferably in a vertical position that makes it possible to see the face of the person trying to open the door.

It may be an advantage that the locking assembly comprises a trigger unit for triggering the camera upon detection of movement of the handle.

Hereby, it is possible to ensure that the picture/video sequence is taken at the moment the handle is operated.

It may be beneficial that the locking assembly comprises a communication interface configured to receive wireless signals directly or indirectly from a server.

Hereby, it is possible for the locking assembly to receive codes (e.g. codes for opening the locking assembly) and other information from the server. Accordingly, it is possible to remotely control the locking assembly.

It may be an advantage that the locking assembly is configured to unlock the door, if the user either manually enters a code (e.g. a 10-digit key code) on a keypad interface or alternatively, enters the code by using a smartphone or another mobile device.

It may be beneficial that the locking assembly comprises a solar cell and a rechargeable battery. Hereby, the locking assembly can harvest energy from the sun.

It may be an advantage that the actuator is an electric linear actuator.

It may be an advantage that the locking assembly comprises an electronic unit configured to go to a sleep mode if no sensor signals are detected within a predefined time period (e.g. within a 1 minute's time period, a 5 minutes' time period, a 10 minutes' time period, a 15 minutes' time period, a 30 minutes' time period or 60 minutes' time period).

It may be advantageous that the locking assembly comprises an electronic unit configured to wake up when a sensor signal is detected.

It may be beneficial that the electronic unit comprises a printed circuit board (PCB).

The user may receive codes for unlocking the locking assembly by using a smartphone provided with a software solution (an application). The codes may be received by the communication unit of the locking assembly and stored in a storage of the locking assembly. Accordingly, the user can unlock the locking assembly by entering the code either on the smartphone or on a user interface provided on the locking assembly.

The locking assembly according to the invention can only be opened if the correct code is entered. If the locking assembly is opened without entering the correct code, the locking assembly will be damaged, and the insurance will cover the losses.

It may be beneficial that the locking assembly comprises an authorisation unit configured to unlock the locking assembly upon detecting that the locking assembly has been in one or more predefined geographical locations.

Hereby, it is possible to ensure that the locking assembly can only be unlocked when it has been verified (e.g. by using a GPS receiver) that the locking assembly has been in one or more predefined geographical locations. Accordingly, it can be controlled that the trailer onto which the locking assembly is mounted travels along the intended route.

The present invention further relates to a method for locking a door comprising mounting a locking assembly as defined herein at a door. The method further comprises obtaining information from the locking assembly and relating this information to the closing or closure of the door.

### Description of the Drawings

The invention will become more fully understood from the detailed description given herein below. The accompanying drawings are given by way of illustration only, and thus, they are not limitative of the present invention. In the accompanying drawings:
- Fig. 1: shows a schematic rear view of a lorry trailer provided with a locking assembly according to the invention;
- Fig. 2: shows a schematic view of a lorry trailer carried by a truck;
- Fig. 3A: shows a schematic, perspective view of an anti-rotation device in an open configuration;
- Fig. 3B: shows a schematic, perspective view of an anti-rotation device in a closed configuration;
- Fig. 4A: shows a schematic, perspective view of a locking assembly according to the invention mounted on a door of a trailer;
- Fig. 4B: shows a close-up view of the anti-rotation device in a configuration in which the door can be opened;
- Fig. 4C: shows a close-up view of the anti-rotation device in a configuration in which the door cannot be opened;
- Fig. 5A: shows a schematic rear view of a lorry trailer provided with a locking assembly;
- Fig. 5B: shows a close-up view of the locking assembly shown in Fig. 5A;
- Fig. 6A: shows a schematic, cross-sectional bottom view of the rear end of a trailer in an open configuration;
- Fig. 6B: shows the trailer shown in Fig. 6B in a closed configuration;
- Fig. 7B: shows how a drilling machine is used to remove a locking assembly mounted to a door and

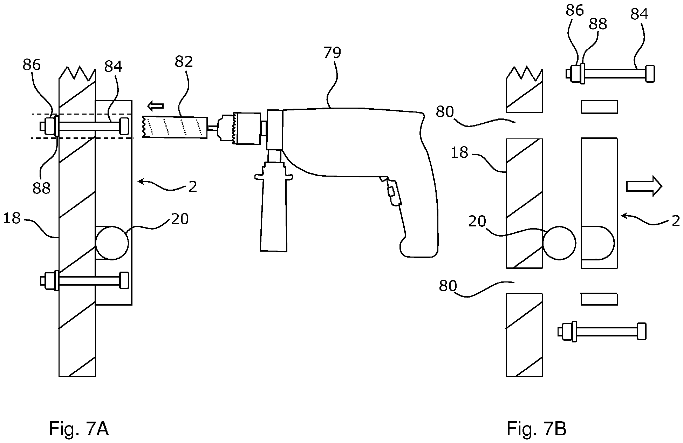

- Fig. 7B: shows the locking assembly shown in Fig. 7A when it has been removed from the door.

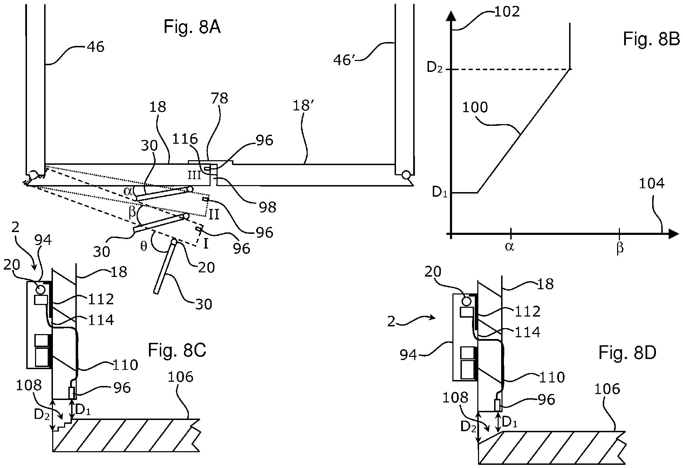

- Fig. 8A: shows a schematic view of a door being closed;
- Fig. 8B: shows a curve illustrating the relationship between the rod angle and a distance measured by a distance sensor;
- Fig. 8C: shows a cross-sectional view of a closed door provided with a distance sensor arranged to measure the distance to a bottom structure and
- Fig. 8D: shows a cross-sectional view of another closed door provided with a distance sensor arranged to measure the distance to a bottom structure.

### Detailed description of the invention

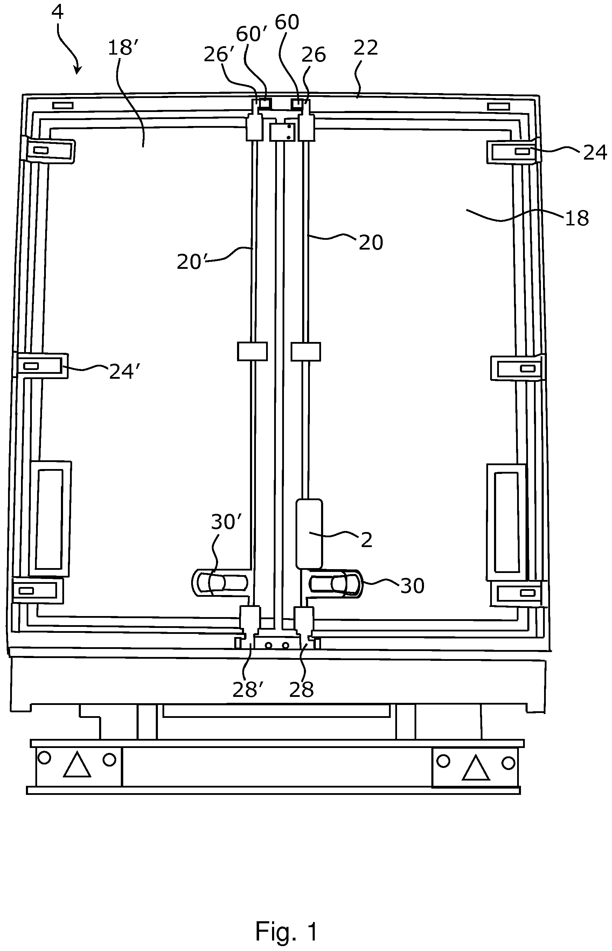

Referring now in detail to the drawings for the purpose of illustrating preferred embodiments of the present invention, a schematic view of a locking assembly 2 according to the present invention is illustrated in Fig. 1.

Fig. 1 is a schematic rear view of a lorry trailer 4 provided with a locking assembly 2 according to the invention. The trailer 4 comprises a first (right) door 18 and a second (left) door 18' rotatably attached to the frame 22 of the trailer by means of a plurality of hinges 24, 24'. Each door 18, 18' comprises a locking rod 20, 20' mechanically connected to a handle 30, 30'. In each end of the rod 20, 20', a locking structure 26, 26', 28, 28' is provided. The locking structures 26, 26', 28, 28' are configured to be brought into engagement with corresponding engagement members 60, 60'. A handle 30, 30' is mechanically connected to each locking rod 20, 20' and configured to bring the locking rods 20, 20' into and out of engagement with the corresponding engagement members 60, 60'.

The locking assembly 2 is attached to the right door 18 above the handle 30. The locking assembly 2 is configured to prevent unauthorised access to the door 18 and thus to the inside of the trailer 4. It is important to underline that the locking assembly 2 may alternatively be attached to the left door 18'.

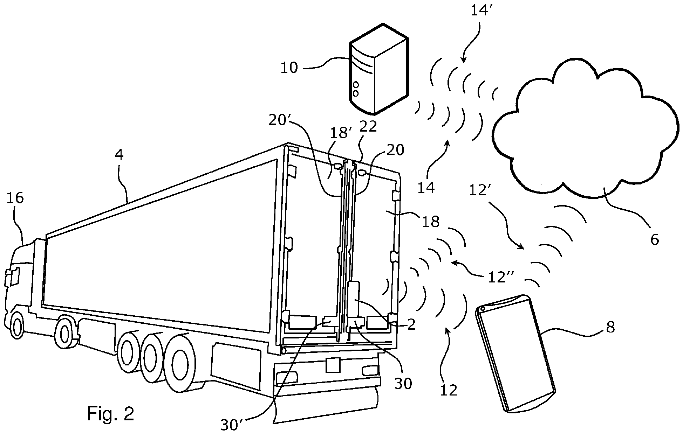

Fig. 2 illustrates a schematic view of a lorry trailer 4 carried by a truck 16. The lorry trailer 4 is equipped with a locking assembly 2 according to the invention. The trailer 4 comprises a right door 18 and a left door 18' each rotatably attached to the frame 22 of the trailer 4. Like the trailer shown in Fig. 1, the trailer 4 comprises locking rods 20, 20' extending along the length of each door 18, 18'. The locking rods 20, 20' are configured to be brought into locking engagement with corresponding locking members when the doors 18, 18' are closed. The locking rods 20, 20' are configured to be brought out of the locking engagement with corresponding locking members when the doors 18, 18' are opened. Each door 18, 18'comprises a handle 30, 30'.

The locking assembly 2 is mounted on the outside of the right door 18 of the trailer 4 and comprises a communication interface (not shown) configured to wirelessly communicate with a mobile device 8 (e.g. a smartphone). As shown in Fig. 2, the communication interface sends wireless signals 12 to a smartphone 8. The smartphone 8 receives information from the locking assembly 2. Such information may contain any type of suitable data including input from sensors (e.g. temperature, humidity, light intensity, acceleration or vibration data) or position data or a time stamp.

The communication interface is configured to receive wireless signals 12 from the smartphone 8 and to send wireless signals 12" to a server 10 via the internet 6. It is shown in Fig. 2 that a server 10 is sending signals 14 and receiving signals 14' via the internet 6. The communication interface is configured to receive wireless signals from the server 10. Such signals may include codes for opening the locking assembly 2. The communication interface may communicate with the server 10 by using any suitable communication technology including direct communication via the Global System for Mobile communication (GSM) or the Universal Mobile Telecommunications System (UMTS).

In order to open the door 18, the user must either manually enter a code (e.g. a 10-digit key code) on a key pad interface or alternatively, enter the code by using the smartphone 8.

The locking assembly 2 may comprise a bidirectional interface, preferably a bidirectional Bluetooth interface configured to receive signals from the smartphone 8 and send signals 12 to the smartphone 8. It is important to underline that any other suitable protocol may be used.

The locking assembly 2 comprises a battery, preferably a long life dry cell battery. The locking assembly 2 may comprise a solar cell and a rechargeable battery.

The locking assembly 2 comprises a key pad interface having numeric keys, functional keys and indicators.

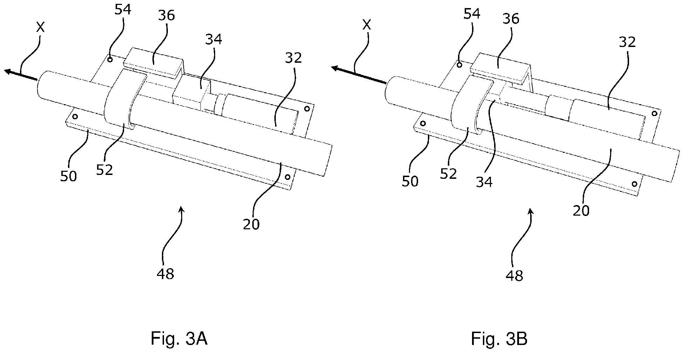

Fig. 3A illustrates a schematic, perspective view of an anti-rotation device 48 according to the invention. The anti-rotation device 48 comprises a plate 50 provided with through-going bores 54, 54' and extending parallel to a rod member 20 of a trailer. The anti-rotation device 48 is provided with an actuator 32 arranged to displace a box-shaped locking member 34 along the longitudinal axis X of the rod member 20. The locking member 34 is attached to the distal end of the actuator 32. The anti-rotation device 48 comprises a U-shaped receiving member 36 shaped and configured to receive the locking member 34 as shown in Fig. 3B. A blocking member 52 is mechanically attached to the rod member 20. The blocking member 52 is shaped as a plate arranged and configured to prevent the rod member 20 from being rotated when the locking member 34 has been received by the receiving member as shown in Fig. 3B, in which the actuator 32 has been activated.

Accordingly, the anti-rotation device 48 is configured to prevent the rod member 20 from being rotated along its' longitudinal axis and thus prevent the trailer from being opened. The actuator 32 may be driven by any suitable energy source. The actuator 32 may be a pneumatic actuator, an electric actuator or another type of actuator. The actuator may comprise magnetic components, spring-type components or other suitable elements.

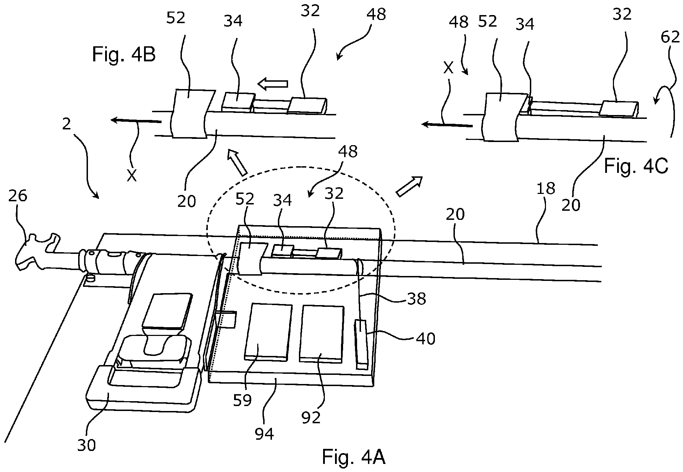

Fig. 4A illustrates a schematic, perspective view of a locking assembly 2 according to the invention mounted on a door 18 of a trailer. The locking assembly 2 comprises a sensor 40 configured to detect the angle of the rod member 20 with respect to a reference angle. In other words, the sensor 40 is an angular sensor configured to measure the angle of the rod member 20. Hereby, the sensor 40 can detect when the handle 30 is used in order to open the door 18. When the trailer is driving, no angular rotation of the rod member 20 will be expected. Although the driving process will cause vertical and horizontal accelerations, no angular rotation will be detected unless someone is trying to open the handle 30.

The sensor 40 may comprise a potentiometer or a strain gauge connected to a cord 36 as indicated in Fig. 4A. However, the sensor 40 may be replaced by any suitable type of sensor configured to detect the angular position of the rod member 20.

The rod member is provided with a locking structure 26 configured to engage with a corresponding engagement member (not shown) provided on the frame of the trailer.

The locking assembly 2 comprises an anti-rotation device 48 basically corresponding to the one shown in Fig. 3A and Fig. 3B. The sensor 40, the anti-rotation device 48 are arranged in a box 94. The rod 20 extends through the box 94. A key pad 59 and a solar cell 92 are provided at the front side of the box 94.

Fig. 4B illustrates a close-up view of the anti-rotation device 48 in a configuration in which the door 18 can be opened, whereas Fig. 4C illustrates a close-up view of the anti-rotation device 48 in a configuration in which the door 18 cannot be opened because the rod member 20 cannot be rotated in the direction of rotation 62 indicated.

The anti-rotation device 48 comprises a plate-shaped blocking member welded to the rod member 20 of the trailer. The anti-rotation device 48 moreover comprises an actuator 32 attached to a slidably arranged locking member 34 formed as a box-shaped structure (e.g. made of metal, preferably a massive metal structure). The anti-rotation device 48 may comprise a receiving member (as shown in Fig. 3A and Fig. 3B) for keeping the locking member 34 fixed in position once the locking member 34 has been received by the receiving member.

The actuator 32 can displace the locking member 34 along the rod member 20 parallel to the longitudinal axis X of the rod member 20. Accordingly, as seen in Fig. 4C, the locking member 34 can be arranged in a position, in which the rod member 20 cannot be rotated in the direction of rotation 62 required to open the door 18.

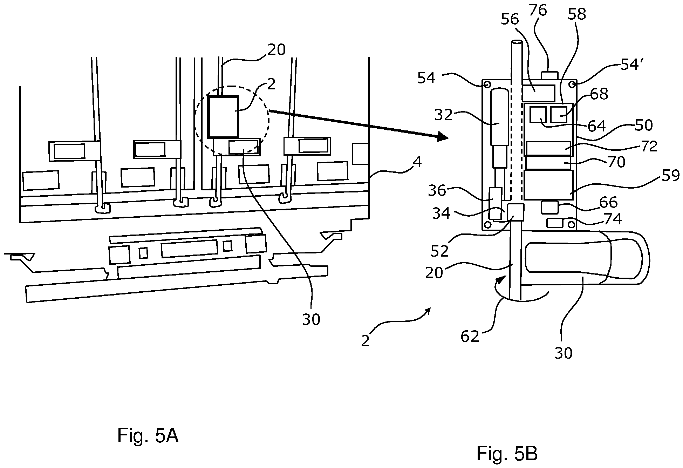

Fig. 5A illustrates a schematic, rear view of a lorry trailer 4 provided with a locking assembly 2 according to the invention, and Fig. 5B illustrates a close-up view of the locking assembly 2 shown in Fig. 5A.

The locking assembly 2 is attached to a door of the trailer and encloses a portion of a rod member 20 configured to bring the door into a locked configuration. The rod member 20 extends along the height of the trailer and along the length of the door.

As it can be seen in Fig. 5B, the locking assembly 2 comprises an actuator 32 arranged to displace a locking member 34 along a movement path extending parallel to the longitudinal axis of the rod member 20. Hereby, it is possible to bring the locking member 34 into the position as shown in Fig. 5B. In this configuration, a receiving member 36 is positioned adjacent to the locking member 34, and a plate-shaped blocking member 52 attached to the rod member 20 abuts the locking member 34. Accordingly, the rod member 20 cannot be rotated in the shown rotational direction 62.

The locking assembly 2 comprises a rectangular plate member 50 provided with through-going bores 54, 54' in each corner. Hereby, the plate member 50 and thus the locking assembly 2 can be attached to the door by means of bolts (not shown). The plate member 50 can be removed in case of an emergency condition by drilling each corner (hereby releasing the bolts in order to detach the plate member 50 from the door). The locking assembly 2 comprises an angle sensor 56 configured to detect the angular position (the angle measured relative to a reference angle) of the rod member 20. The locking assembly 2 furthermore comprises an electronic unit 58 electrically connected to the angle sensor 56 and to a key pad 59. The locking assembly 2 also comprises a battery 70 and a power supply 72 for supplying the actuator 32 and the other power-consuming components.

The locking assembly 2 comprises a Global Positioning System (GPS) 68 receiver and a Bluetooth interface 64 configured to carry out bidirectional communication with an external communication device (e.g. a smartphone) or with a server via the internet.

The locking assembly 2 comprises a light sensor 76 arranged and configured to measure the light intensity inside the trailer (and thus detect if someone opens the door or removes the plate member 50). The locking assembly 2 comprises a switch 74 configured to detect if the locking assembly 2 is removed from the door on which it is attached.

The locking assembly 2 comprises a camera 66 arranged and configured to take a picture or a video sequence of the operator operating the locking assembly 2. The camera may be triggered by any suitable trigger means, e.g. an angle sensor 56 detecting if the handle 30 is operated or if someone tries to operate the handle.

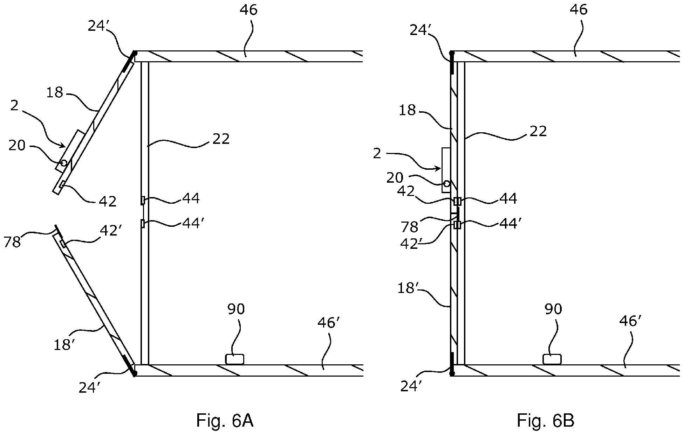

Fig. 6A illustrates a schematic, cross-sectional bottom view of the rear end of a trailer in an open configuration, whereas Fig. 6B illustrates the trailer shown in Fig. 6A in a closed configuration.

The trailer comprises a right-side wall 46 and a left-side wall 46'. The trailer comprises a right door 18 rotatably attached to the right-side wall 46 by means of a hinge 24. The trailer moreover comprises a left door 18' rotatably attached to the left side wall 46' by means of a hinge 24'.

The trailer moreover comprises a frame 22 provided with a right magnet 44 and a left magnet 44'. The right magnet 44 is arranged to engage with a proximity sensor 42 provided at the inside of the right door 18, whereas the left magnet 44' is arranged to engage with a proximity sensor 42' provided at the inside of the left door 18'. A closing plate 78 is attached to the left door 18. The closing plate 78 prevents the right door 18' from being opened when the left door 18 is closed.

A locking assembly 2 according to the invention is mounted on the outside surface of the right door 18. The locking assembly 2 comprises the sensors 42, 42', however alternatively the locking assembly may be configured to communicate with the sensors 42, 42'. In one embodiment according to the invention the locking assembly comprises only one of the sensors 42, 42'. By means of sensors 42, 42' the locking assembly 2 can detect when the sensor 42, 42' is close to the magnet 44, 44' (e.g. when the door is closed) like shown in Fig. 6B. A CO₂-sensor is arranged inside the trailer. The CO₂-sensor is configured to detect the CO2 content inside the trailer. Accordingly, the CO₂-sensor can detect if a human is inside the trailer because the CO₂-level will increase.

Fig. 7B illustrates a schematic, cross-sectional view of how a drilling machine 79 is used to remove a locking assembly 2 according to the invention attached to a door 18 of a trailer. The locking assembly 2 is attached to the door 18 by means of threaded bolts 84 that have received a nut 86 and a washer 88 from the inside of the trailer. Accordingly, the locking assembly 2 is mounted from the inside of the trailer.

A rod 20 extends along the outside surface of the door 18 and through a cavity provided in the locking assembly 2.

The drilling machine 79 is used to provide bores (see Fig. 7B) in the locking assembly 2 and in the door 18 in order to remove the locking assembly from the door 18 in an emergency situation in which the locking assembly 2 cannot be opened (e.g. if the locking assembly breaks down).

Fig. 7B illustrates a schematic, cross-sectional view of the locking assembly 2 shown in Fig. 7A in a configuration in which the locking assembly 2 has been removed from the door 18. Bores 80 have been made in the door 18 and in the locking assembly by using the drilling machine shown in Fig. 7A. Accordingly, the bolts 84 and thus the locking assembly 2 can be detached from the door 18 as seen in Fig. 7B. This is a major advantage in emergencies, e.g. if the locking assembly 2 cannot be opened as intended.

Fig. 8A illustrates a schematic view of a left door 18 being closed. The door 18 is rotatably attached to the left side wall 46 of a trailer. The trailer comprises a right sidewall 46' and a right door 46' rotatably attached thereto. The right door 18' comprises a closing plate 78 attached at the distal end of the right door 18'.

A gap 98 is provided between the left door 18 and the right door 18' when the doors 18, 18' are closed. A distance sensor 96 is arranged at the distal end of the left door 18. The distance sensor 96 is capable of measuring the distance between the distance sensor and the facing end surface 116 of the right door 18'.

The left door 18' arranged in a first position I is indicated with a stipple line. In this first position I, the rod angle θ (defined as the angle between the handle 30 and the front surface of the door 18) is approximately 90 degrees.

The left door 18' arranged in a second position II is indicated with a dotted line. In this second position II, the rod angle β is approximately 30 degrees.

The left door 18' arranged in a third almost closed position III is indicated with a solid line. In this third position III, the rod angle α is approximately 10 degrees. When the locking device is mounted on a trailer, a calibration process is carried out. During this calibration process, the relationship between the rod angle and the distance between the distance sensor and the end surface 116 of the right door 18' is measured by means of the distance sensor and an angle sensor configured to detect the rod angle. The data defining this relationship are stored for later comparison. Accordinlgy, when the door 18' is closed, the locking device will measure the rod angle and the distance between the distance sensor and the end surface 116 of the right door 18', preferably on a continuous basis.

Therefore, the locking device can verify if the relationship between the rod angle and the detected distance is consistent with the stored relationship. If this is the case, the locking device will "approve" the door as being closed. However, if the the locking device cannot verify that the relationship between the rod angle and the detected distance is consistent with the stored relationship, the locking device will not acknowledge the door 18 as beening closed.

Since two parameters have to match, it is very difficult to cheat and "convince" the locking device that the door is closed.

Fig. 8B illustrates a curve 100 illustrating the relationship between the rod angle 104 and a distance 102 between the distance sensor and the end surface of the right door (see Fig. 8A) measured by a distance sensor. It can be seen that the shortest distance is found when angle is small (the door is closed or nearly closed). The angle 104 in a linear increasing function of the rod angle in a certain rod angle range, wherein the distance 102 increases form a first value D₁ to a second value D₂. After a certain rod angle, the distance increases heavily.

Fig. 8C illustrates a cross-sectional view of a closed door 18 provided with a distance sensor 96 arranged to measure the distance D₁, D₂ to a bottom structure 106 of a trailer. The distance sensor 96 is arranged at an end surface of the door 18 and is configured to measure the distance D₁, D₂ to a profile 108 of a rabbet of the bottom structure 106 of a trailer. The rabbet is step shaped and the distance decreases from an initial value D₂ to an end value D₁.

A locking device 2 is attached to the door 18. A reinforcement plate 112 provided with a hole 114 is attached to the front side of the door 18. A cable 110 connected to the distance sensor 96 extends through the hole 114 into the box 94 of the locking device 2. A rod 20 extends through the box 94.

Fig. 8D illustrates a cross-sectional view of another closed door 18 provided with a distance sensor 96 arranged to measure the distance to a rabbet of the bottom structure 106 of a trailer. The rabbet is linear decreasing from a first value D₂ to a second value D₁. A locking device 2 corresponding to the ine shown in Fig. 8C is attached to the door 18. The distance measured by the distance sensor 96 corresponds to the curve show in Fig. 8B.

### List of reference numerals

- 2: Locking assembly
- 4: Trailer
- 6: Internet
- 8: Mobile device
- 10: Server
- 12, 12': Signal
- 14, 14': Signal
- 16: Vehicle
- 18, 18': Door
- 20, 20': Rod member
- 22: Frame
- 24, 24': Hinge
- 26, 26', 28, 28': Locking structure
- 30, 30': Handle
- 32: Actuator
- 34: Locking member
- 36: Receiving member
- 38: Cord/wire
- 40: Sensor
- 42, 42': Sensor
- 44, 44': Magnet
- 46, 46': Side wall
- 48: Anti-rotation device
- 50: Plate
- 52: Blocking member
- 54, 54': Bore
- 56: Angle sensor
- 58: Electronic unit
- 59: Key pad
- 60, 60': Engagement member
- 62: Rotational direction for unlocking
- 64: Communication interface
- 66: Camera
- 68: GPS receiver
- 70: Battery
- 72: Power supply
- 74: Switch
- 76: Light sensor
- X: Axis
- 78: Closing plate
- 79: Drilling machine
- 80: Bore
- 82: Hole saw
- 84: Bolt
- 86: Nut
- 88: Washer
- 90: CO₂-sensor
- 92: Solar cell
- 94: Box
- 96: Distance sensor
- 98: Gap
- 100: Curve
- 102: Distance
- 104: Rod angle (angular position of the rod)
- 106: Bottom structure
- 108: Profile
- 110: Cable
- 112: Reinforcement plate
- 114: Hole
- 116: End surface
- D₁, D₂: Distance
- α, β, θ: Angle
- I, II, III: Door position

## Claims

1. A locking assembly (2) configured to be mounted on a door (18, 18') mounted in a frame (22) in order to prevent the door (18, 18') from being opened, wherein the door (18, 18') comprises a locking arrangement comprising a handle (30, 30') connected to a rotatably mounted rod member (20, 20'), **characterised in that** the locking assembly (2) comprises
- an angle sensor (56) arranged to detect the rotational position or the change in the rotational position of a rod member (20, 20'),
- an anti-rotation device (48) having a locking member (34) and an actuator (32) arranged and configured to displace the locking member (34) and bring the locking member (34) into:
- a position in which the rod member (20, 20') cannot be rotated in one predefined direction of rotation (62), and
- a position in which the rod member (20, 20') can be rotated in one predefined direction of rotation (62),
- and a blocking member (52) is attached to the rod member (20, 20') to abut the locking member (34).

2. A locking assembly (2) according to claim 1, **characterised in that** the locking assembly (2) comprises a distance sensor (96) configured to detect a distance (D₁, D₂) between the distance sensor (96) and a structure (18', 106, 116) that the distance sensor (96) is brought into the proximity of the frame (22).

3. A locking assembly (2) according to claim 2, **characterised in that** the distance sensor (96) is located at a door edge, such as on the upper door edge, the lower door edge or at the side door edge.

4. A locking assembly (2) according to claim 2 or 3, **characterised in that** the distance sensor (96) is connected to the locking assembly (2) by means of an electrical wire or a cable having multiple wires.

5. A locking assembly (2) according to any one of the preceding claims, **characterised in that** the angle sensor (56) is connected to the locking assembly by means of an electrical wire or a cable having multiple wires.

6. A locking assembly according to any one of the preceding claims, **characterised in that** the measurements from the angle sensor (56) and the distance sensor (96) are compared, whereby closure of the door (18, 18') can be determined.

7. A locking assembly (2) according to any one of claims 1-6, **characterised in that** the locking assembly (2) comprises a GPS receiver (68).

8. A locking assembly (2) according to one of the preceding claims, **characterised in that** the locking assembly (2) comprises an interface (59, 64) configured to:
- allow a user to enter a code or
- receive a code sent by an external device (8).

9. A locking assembly (2) according to claim 8, **characterised in that** the locking assembly (2) comprises a verification module (58) configured to receive a code entered by the user either on a user interface (59, 64) or by applying a remote device (8), wherein the verification module (58) is configured to verify if the entered code corresponds to a predefined code, wherein the locking assembly (2) is configured to be unlocked if the entered code corresponds to the predefined code.

10. A locking assembly (2) according to one of the preceding claims, **characterised in that** the locking assembly (2) comprises a light sensor (76).

11. A locking assembly (2) according to one of the preceding claims, **characterised in that** the locking assembly (2) comprises a switch (74) configured to detect if the locking assembly (2) is removed from the door (18, 18') to which it is attached.

12. A locking assembly (2) according to one of the preceding claims, **characterised in that** the locking assembly (2) comprises a camera (66) arranged and configured to take a picture or a video sequence.

13. A locking assembly (2) according to one of the preceding claims, **characterised in that** the locking assembly (2) comprises a communication interface (64) configured to receive wireless signals directly or indirectly from a server.

14. A locking assembly (2) according to one of the preceding claims, **characterised in that** the locking assembly (2) comprises an authorisation unit configured to unlock the locking assembly upon detecting that the locking assembly (2) has been in one or more predefined geographical locations.

## Patentansprüche

1. Verriegelungsvorrichtung (2), die konfiguriert ist, um an einer Tür (18, 18') montiert zu sein, die in einem Rahmen (22) montiert ist, um zu verhindern, dass die Tür (18, 18') geöffnet wird, wobei die Tür (18, 18') eine Verriegelungsanordnung umfasst, die einen Griff (30, 30') umfasst, der mit einem drehbar montierten Stangenelement (20, 20') verbunden ist, **dadurch gekennzeichnet, dass** die Verriegelungsvorrichtung (2) Folgendes umfasst:
- einen Winkelsensor (56), der angeordnet ist, um die Drehposition oder die Veränderung der Drehposition eines Stangenelements (20, 20') zu erfassen,
- eine Antidrehvorrichtung (48), die ein Verriegelungselement (34) und einen Aktuator (32) hat, die angeordnet und konfiguriert sind, um das Verriegelungselement (34) zu verschieben und das Verriegelungselement (34) in Folgendes zu bringen:
- eine Position, in der das Stangenelement (20, 20') nicht in eine vordefinierte Drehrichtung (62) gedreht werden kann, und
- eine Position, in der das Stangenelement (20, 20') in eine vordefinierte Drehrichtung (62) gedreht werden kann,
- und ein Blockierelement (52), das an dem Stangenelement (20, 20') befestigt ist, um an das Verriegelungselement (34) anzuliegen.

2. Verriegelungsvorrichtung (2) nach Anspruch 1, **dadurch gekennzeichnet, dass**:
die Verriegelungsvorrichtung (2) einen Distanzsensor (96) umfasst, der konfiguriert ist, um eine Distanz (D₁, D₂) zwischen dem Distanzsensor (96) und einer Struktur (18', 106, 116) zu erfassen, sodass der Distanzsensor (96) in die Nähe des Rahmens (22) gebracht wird.

3. Verriegelungsvorrichtung (2) nach Anspruch 2, **dadurch gekennzeichnet, dass** sich der Distanzsensor (96) an einer Türkante, wie z. B. an der oberen Türkante, der unteren Türkante oder an der seitlichen Türkante, befindet.

4. Verriegelungsvorrichtung (2) nach Anspruch 2 oder 3, **dadurch gekennzeichnet, dass** der Distanzsensor (96) mit der Verriegelungsvorrichtung (2) durch eine elektrische Leitung oder ein Kabel, das mehrere Leitungen hat, verbunden ist.

5. Verriegelungsvorrichtung (2) nach einem der vorhergehenden Ansprüche, **dadurch gekennzeichnet, dass** der Winkelsensor (56) mit der Verriegelungsvorrichtung durch eine elektrische Leitung oder ein Kabel, das mehrere Leitungen hat, verbunden ist.

6. Verriegelungsvorrichtung nach einem der vorhergehenden Ansprüche, **dadurch gekennzeichnet, dass** die Messungen des Winkelsensors (56) und des Distanzsensors (96) verglichen werden, wodurch die Schließung der Tür (18, 18') bestimmt werden kann.

7. Verriegelungsvorrichtung (2) nach einem der Ansprüche 1-6, **dadurch gekennzeichnet, dass** die Verriegelungsvorrichtung (2) einen GPS-Empfänger (68) umfasst.

8. Verriegelungsvorrichtung (2) nach einem der vorhergehenden Ansprüche, **dadurch gekennzeichnet, dass** die Verriegelungsvorrichtung (2) eine Schnittstelle (59, 64) umfasst, die zu Folgendem konfiguriert ist:
- Zulassen, dass ein Benutzer einen Code eingibt, oder
- Empfangen eines Codes, der von einem externen Gerät (8) gesendet wurde.

9. Verriegelungsvorrichtung (2) nach Anspruch 8, **dadurch gekennzeichnet, dass** die Verriegelungsvorrichtung (2) ein Verifikationsmodul (58) umfasst, das konfiguriert ist, um einen Code zu empfangen, der durch den Benutzer entweder auf einer Schnittstelle (59, 64) oder durch Anwenden eines externen Geräts (8) eingegeben wurde, wobei das Verifikationsmodul (58) konfiguriert ist, um zu verifizieren, wenn der eingegebene Code mit einem vordefinierten Code übereinstimmt, wobei die Verriegelungsvorrichtung (2) konfiguriert ist, um entriegelt zu sein, wenn der eingegebene Code mit dem vordefinierten Code übereinstimmt.

10. Verriegelungsvorrichtung (2) nach einem der vorhergehenden Ansprüche, **dadurch gekennzeichnet, dass** die Verriegelungsvorrichtung (2) einen Lichtsensor (76) umfasst.

11. Verriegelungsvorrichtung (2) nach einem der vorhergehenden Ansprüche, **dadurch gekennzeichnet, dass** die Verriegelungsvorrichtung (2) einen Schalter (74) umfasst, der konfiguriert ist, um zu erfassen, wenn die Verriegelungsvorrichtung (2) von der Tür (18, 18') entfernt wird, an der sie befestigt ist.

12. Verriegelungsvorrichtung (2) nach einem der vorhergehenden Ansprüche, **dadurch gekennzeichnet, dass** die Verriegelungsvorrichtung (2) eine Kamera (66) umfasst, die angeordnet und konfiguriert ist, um ein Bild oder eine Videosequenz aufzunehmen.

13. Verriegelungsvorrichtung (2) nach einem der vorhergehenden Ansprüche, **dadurch gekennzeichnet, dass** die Verriegelungsvorrichtung (2) eine Kommunikationsschnittstelle (64) umfasst, die konfiguriert ist, um Funksignale direkt oder indirekt von einem Server zu empfangen.

14. Verriegelungsvorrichtung (2) nach einem der vorhergehenden Ansprüche, **dadurch gekennzeichnet, dass** die Verriegelungsvorrichtung (2) eine Autorisierungseinheit umfasst, die konfiguriert ist, um die Verriegelungsvorrichtung bei Erfassen, dass die Verriegelungsanordnung (2) an einem oder mehreren vordefinierten geographischen Standorten war, zu entriegeln.

## Revendications

1. Ensemble de verrouillage (2) conçu pour être monté sur un vantail (18, 18') monté dans un encadrement (22) afin d'empêcher l'ouverture du vantail (18, 18'), ledit vantail (18, 18') comprenant un agencement de verrouillage comprenant une poignée (30, 30') reliée à un élément formant barre (20, 20') monté rotatif, **caractérisé en ce que** l'ensemble de verrouillage (2) comprend :
- un capteur de position angulaire (56) agencé pour détecter la position angulaire ou le changement de la position angulaire d'un élément formant barre (20, 20'),
- un dispositif anti-rotation (48) présentant un élément de verrouillage (34) et un actionneur (32) agencé et conçu pour déplacer l'élément de verrouillage (34) et faire passer l'élément de verrouillage (34) dans :
- une position dans laquelle l'élément formant barre (20, 20') ne peut pas subir de rotation dans un sens de rotation (62) prédéfini, et
- une position dans laquelle l'élément formant barre (20, 20') peut subir une rotation dans un sens de rotation (62) prédéfini,
- et un élément de blocage (52) rattaché à l'élément formant barre (20, 20') et venant en butée contre l'élément de verrouillage (34).

2. Ensemble de verrouillage (2) selon la revendication 1, **caractérisé en ce que** l'ensemble de verrouillage (2) comprend un capteur de distance (96) conçu pour détecter une distance (D₁, D₂) entre le capteur de distance (96) et une structure (18', 106, 116) à proximité de laquelle est amené le capteur de distance (96).

3. Ensemble de verrouillage (2) selon la revendication 2, **caractérisé en ce que** le capteur de distance (96) est situé sur un bord du vantail, tel que le bord supérieur du vantail, le bord inférieur du vantail ou le bord latéral du vantail.

4. Ensemble de verrouillage (2) selon la revendication 2 ou 3, **caractérisé en ce que** le capteur de distance (96) est relié à l'ensemble de verrouillage (2) au moyen d'un fil électrique ou d'un câble présentant de multiples fils.

5. Ensemble de verrouillage (2) selon l'une quelconque des revendications précédentes, **caractérisé en ce que** le capteur de position angulaire (56) est relié à l'ensemble de verrouillage au moyen d'un fil électrique ou d'un câble présentant de multiples fils.

6. Ensemble de verrouillage selon l'une quelconque des revendications précédentes, **caractérisé en ce que** les mesures issues du capteur de position angulaire (56) et du capteur de distance (96) sont comparées, permettant de déterminer la fermeture du vantail (18, 18').

7. Ensemble de verrouillage (2) selon l'une quelconque des revendications 1 à 6, **caractérisé en ce que** l'ensemble de verrouillage (2) comprend un récepteur GPS (68).

8. Ensemble de verrouillage (2) selon l'une des revendications précédentes, **caractérisé en ce que** l'ensemble de verrouillage (2) comprend une interface (59, 64) conçue pour :
- permettre à un utilisateur de saisir un code, ou
- recevoir un code envoyé par un dispositif externe (8).

9. Ensemble de verrouillage (2) selon la revendication 8, **caractérisé en ce que** l'ensemble de verrouillage (2) comprend un module de vérification (58) conçu pour recevoir un code saisi par l'utilisateur soit sur une interface utilisateur (59, 64), soit par l'application d'un dispositif distant (8), ledit module de vérification (58) étant conçu pour vérifier si le code saisi correspond à un code prédéfini, ledit ensemble de verrouillage (2) étant conçu pour être déverrouillé si le code saisi correspond au code prédéfini.

10. Ensemble de verrouillage (2) selon l'une des revendications précédentes, **caractérisé en ce que** l'ensemble de verrouillage (2) comprend un capteur de luminosité (76).

11. Ensemble de verrouillage (2) selon l'une des revendications précédentes, **caractérisé en ce que** l'ensemble de verrouillage (2) comprend un interrupteur (74) conçu pour détecter si l'ensemble de verrouillage (2) est retiré du vantail (18, 18') auquel il était rattaché.

12. Ensemble de verrouillage (2) selon l'une des revendications précédentes, **caractérisé en ce que** l'ensemble de verrouillage (2) comprend une caméra (66) agencée et conçue pour prendre une photographie ou une séquence vidéo.

13. Ensemble de verrouillage (2) selon l'une des revendications précédentes, **caractérisé en ce que** l'ensemble de verrouillage (2) comprend une interface de communication (64) conçue pour recevoir des signaux sans fil, directement ou indirectement, en provenance d'un serveur.

14. Ensemble de verrouillage (2) selon l'une des revendications précédentes, **caractérisé en ce que** l'ensemble de verrouillage (2) comprend une unité d'autorisation conçue pour déverrouiller l'ensemble de verrouillage suite à la détection du fait que l'ensemble de verrouillage (2) s'est trouvé dans un ou plusieurs emplacements géographiques prédéfinis.
